(19) **Europäisches Patentamt / European Patent Office / Office européen des brevets**

(11) **EP 3 008 443 B1**

(12) **EUROPEAN PATENT SPECIFICATION**

(45) Date of publication and mention
of the grant of the patent:
**06.12.2017  Bulletin 2017/49**

(21) Application number: **14810802.0**

(22) Date of filing: **02.06.2014**

(51) Int Cl.:
*G01M 15/04* (2006.01)     *F02D 41/00* (2006.01)
*G01L 3/24* (2006.01)     *G01L 25/00* (2006.01)
*F02D 41/14* (2006.01)     *F02D 41/04* (2006.01)

(86) International application number:
**PCT/SE2014/050666**

(87) International publication number:
**WO 2014/200415 (18.12.2014 Gazette 2014/51)**

(54) **METHOD FOR ESTIMATING A TORQUE GENERATED BY AN INTERNAL COMBUSTION ENGINE**

VERFAHREN ZUR MESSUNG EINES VON EINEM VERBRENNUNGSMOTOR ERZEUGTEN DREHMOMENTS

PROCÉDÉ D'ESTIMATION D'UN COUPLE GÉNÉRÉ PAR UN MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.06.2013  SE 1350707**

(43) Date of publication of application:
**20.04.2016  Bulletin 2016/16**

(73) Proprietor: **Scania CV AB
151 87 Södertälje (SE)**

(72) Inventors:
• **JOHANSSON, Björn
  S-125 31 Älvsjö (SE)**
• **LARSSON, Anders
  S-146 49 Tullinge (SE)**

(74) Representative: **Scania CV AB
Patents, GP 117kv
151 87 Södertälje (SE)**

(56) References cited:
**WO-A1-2006/054928     DE-A1- 19 941 171
DE-A1-102009 001 128    US-A- 4 697 561
US-A- 4 898 025         US-A1- 2003 167 118
US-A1- 2008 319 725**

EP 3 008 443 B1

**Description**

FIELD OF THE INVENTION

The present invention pertains to a method for estimation of a mean torque generated by a combustion engine. The invention is particularly, but not exclusively, focused on the performance of such a method in motor vehicles in the form of wheeled commercial vehicles, especially heavy goods vehicles, such as trucks, tractors and buses. Mean torque here means a mean torque generated during at least one combustion cycle in the combustion engine.

There are several reasons why it is interesting to know, all the time, what actual torque a combustion engine generates. For example, one may need to control that the combustion engine generates the torque which it is designed to generate according to specifications. If the engine does not generate the torque which it is intended to generate, it is possible, by knowing the torque which is generated, to adapt the fuel injection time in order to thus control the torque. One may also need to control the torque in order to be able to, during some shifting procedures, engage and disengage gears with good comfort. With a future increase in fuel flora of varying energy content, it will become increasingly important to be able to estimate the torque generated by the engine, among others in order to make vehicles driven by combustion engines less jerky, and thus more comfortable.

BACKGROUND TECHNOLOGY

There are several prior art methods to estimate a torque from a combustion engine.

US20030167118 describes such a method, where measurements of the engine's engine speed are used in order to estimate the engine's torque with the help of the Fourier transform. EP1559898 describes a method for estimation of torque from a combustion engine, where an estimated engine speed signal is produced via a trigonometric model. From the estimated engine speed signal, the amplitude of the engine speed fluctuations is obtained, which in turn are used to estimate the torque. US2009/0132182 describes a method to produce a value representative of the mean torque generated by the engine during a sampling period. A mean value for the engine's engine speed is calculated during the sampling period, and this value is then used in a polynomial to obtain a value for the mean torque. Fourier series, or the Fourier transform, are used to determine the power contribution from a certain cylinder.

US2008/0319725 describes a method to first calculate the rotational speed of a combustion engine and then use the calculated rotational speed's Fourier coefficient in order to obtain a mean torque generated by each cylinder in the engine.

Other methods to estimate a torque from a combustion engine are known from DE 102009001128, DE 19941171 and US 4697561.

SUMMARY OF THE INVENTION

The objective of the present invention is to present a method to estimate a mean torque generated by a combustion engine, which method is at the same time sufficiently reliable to provide an estimate which is proximate to the actually generated torque, and sufficiently robust and uncomplicated to be used in order to estimate the torque in real time in for example a vehicle which is driven by the engine.

This objective is achieved according to the invention by providing a method for estimating a mean torque generated by a combustion engine with at least two cylinders, which method comprises the steps to:

a) generate an engine speed vector, where several measuring values are registered during at least one part of a combustion cycle in the engine, wherein each measuring value is associated with one of the engine's cylinders and represents the engine's instantaneous speed at the respective measuring time,
b) determine the engine speed vector's n:th highest and n:th lowest value, respectively, associated with the respective cylinder, where $2 \leq n \leq x/2$, where $x$ is the number of measuring values in the engine speed vector associated with the respective cylinder,
c) calculate, for the respective cylinder, the difference between the two values determined in step b,
d) generate a signal $E$ representing the differences obtained in step c as a function of time,
e) estimate the torque generated by the engine in step a as a function $T$ depending on at least the signal $E$ generated in step d.

With the method according to the invention, a filtered amplitude of the engine speed fluctuations in the engine is thus used during a combustion cycle, in order to estimate the mean torque generated by the engine. At the calculation of the engine speed amplitude, the respective $n$-1 highest and lowest values are removed from the engine speed vector's measuring values associated with the respective cylinder. In this manner, the method becomes less sensitive to diverging values and thus more robust than if the respective highest and lowest value were used. Preferably, the method is carried out with $2 \leq n \leq x/4$ in order not to lose too much information. With the method according to the invention, no extra sensors are required, but a good estimation of the torque generated may be achieved only with the help of an engine speed sensor, which must exist anyway, among others in order to determine when the fuel injection should occur, in order to maintain the idle speed and at shifting procedures.

According to one embodiment the method is carried out with the help of a control device, wherein the function $T$ is a polynomial whose coefficients are determined at an initial calibration of said control device. A polynomial provides a relatively simple and good estimation of the generated torque. Since the coefficients are determined at an initial calibration the algorithm used to estimate the torque becomes robust. It is possible to make this calibration with the help of the newly manufactured engine, but it is more efficient to determine the coefficients with the help of a development engine which is identical to the subsequently serially manufactured engines, whose torque must be estimated. The calibration may also be made theoretically with the help of e.g. a calculation model.

According to a specific variant of this embodiment, the initial calibration of the control device comprises carrying out said steps a-e, and the additional steps:

f) to measure a torque generated by the engine simultaneously with step a,
g) to select coefficients of a polynomial by way of curve fitting, so that the polynomial describes the in step f measured generated torque as a function depending on at least the signal E.

This calibration method gives an expression which may describe the torque generated by the engine arbitrarily well. The installation used for the measurement of the generated torque should not be too unlike the installation which the engine then will be used in, since the engine speed variations may otherwise differ from how they appear when the engine is mounted in its site of use, e.g. in a vehicle.

According to another embodiment the torque generated by the engine is estimated in step e as a function $T = \alpha + \beta E$, where $\alpha$ and $\beta$ are coefficients and where $E$ is the signal generated in step d. The torque is estimated in this manner with a simple, and, in terms of calculation, cheap and robust expression.

According to another embodiment a mean engine speed signal $V$ is generated, representing the engine's mean speed $\overline{\omega}$, and the torque generated by the engine is estimated in step e as a function $T$ depending on the mean engine speed signal $V$. According to one variant of this embodiment, the torque generated by the engine is estimated as a function $T = \alpha + \beta E + \gamma V + \eta EV$, where $\alpha$, $\beta$, $y$ and $\eta$ are coefficients, where $E$ is the signal generated in step d and where $V$ is the mean engine speed signal. In this manner an even better estimation of the engine's torque may be made.

According to another embodiment the engine's charge air pressure $P$ is measured, and the torque generated by the engine is estimated in step e as a function $T$ depending on the engine's charge air pressure. If it is possible to make a reliable charge pressure measurement, this may give a good estimate of the generated torque, which may be less sensitive to potential measuring faults in the engine speed measurement and to the impact from the rest of the drive line, than if only the engine speed and the engine speed amplitude were used for the estimation of the torque.

According to one embodiment the engine speed vector's length corresponds to the number of measuring occasions during a combustion cycle in the engine. This allows other analyses of the measured engine speeds to be carried out.

According to another embodiment the number of crank angle degrees $\theta$ between each measuring time during a combustion cycle in the engine is constant. This provides an uncomplicated interpretation of the engine speed measuring values and simplifies the filtration and generation of the signal $E$.

According to another embodiment the function $T$ is selected depending on the gear which is used to drive a vehicle operated by the combustion engine. The coefficients in a polynomial expression may for example be selected differently depending on the gear. By detecting which gear is used, the coefficients may be selected so that the polynomial expression describes the torque as well as possible. This is particularly useful in applications where the drive line's dynamics are of great significance.

According to another embodiment, the function $T$ is selected depending on the ambient parameters comprising ambient pressure and/or temperature and/or fuel type. For example, different coefficients in a polynomial expression may be selected depending on whether the engine is driven with petrol, ethanol, diesel, bio-diesel or gas. This may also provide a better estimate of the torque than if the same function is selected independently of the prevailing ambient parameters.

According to another embodiment, the differences calculated in step c form a signal D as a function of a crank angle, which signal D is filtered through a low pass filter or a median filter to form a signal $H$. According to one variant of this embodiment, the signal $E$ is generated by re-sampling the signal $H$ formed in step c with respect to time. The filtration reduces the bandwidth of the signal $D$ and reduces the risk of folding effects when this signal is then re-sampled with respect to time. It also reduces noise levels. The bandwidth of the filter should thus be selected so that folding effects are avoided when the desired sampling frequency is used to re-sample with respect to time. A typical sampling frequency is between 1-100 ms, preferably between 5-20 ms. For example, a sampling frequency of 10 ms is used.

According to another aspect of the invention, the objective is achieved with a computer program which may be downloaded to an internal memory of a computer, comprising software to control the steps according to the method suggested above, when said program is executed on a computer.

According to another aspect of the invention, the objective is achieved with a computer program product comprising a data storage medium which is readable by a computer, the computer program code of a computer program according to the above being stored on the data storage medium.

According to another aspect of the invention, the objective is achieved through an electronic control device comprising an execution means, a memory connected to the execution means and a data storage medium connected to the execution means, the computer program code in a computer program according to the above being stored on said data storage medium.

According to another aspect of the invention, the objective is achieved through a motor vehicle comprising an electronic control device according to the above.

Other advantageous features of the invention and advantages of the latter are set out in the description below.

BRIEF DESCRIPTION OF THE DRAWINGS

The invention is described below with the help of example embodiments, with reference to the enclosed drawings, where

Fig. 1a-b shows schematically a combustion engine's engine speed as a function of crank angle,
Fig. 2 shows the estimated torque and measured torque for a combustion engine as a function of time, and
Fig. 3 is a schematic diagram of a control device for implementation of a method according to the invention.

DETAILED DESCRIPTION OF EMBODIMENTS ACCORDING TO THE INVENTION

The method according to the invention is carried out for a combustion engine with several cylinders. In such a combustion engine each cylinder contributes to the combustion engine's total torque with a net torque. During a stationary or quasi-stationary combustion cycle in the engine, the instantaneous torque varies during the entire time, as the combustion engine generates around a mean torque $\overline{M}$. The torque generated by the engine may thus be divided up into a constant mean torque $\overline{M}$ and a variable torque $M_{\text{var}}$:

$$M = \overline{M} + M_{\text{var}} . \tag{1}$$

At a low load the engine generates a low mean torque $\overline{M}$ and the torque variation amplitude $A_M$, which is the amplitude with which the torque varies during a combustion cycle, is also low. At a high load the opposite applies, i.e. a high mean torque $\overline{M}$ and a high torque variation amplitude $A_M$. The torque variation amplitude $A_M$ is proportionate to the mean torque $\overline{M}$.

In stationary conditions the mean torque $L_m$ of the engine is the same as the generated mean torque $\overline{M}$:

$$L_m = \overline{M} \tag{2}$$

Simplified, the engine may during quasi-stationary conditions be described by the differential equation

$$J\dot{\omega} = \overline{M} + M_{\text{var}} - L_m = M_{\text{var}} , \tag{3}$$

$$\frac{\mathrm{d}\omega}{\mathrm{d}t} = \frac{1}{J} M_{\text{var}} , \tag{4}$$

where $\omega$ is the engine's speed. The engine speed may also be expressed as

$$\omega = \frac{d\theta}{dt}, \qquad (5)$$

where $\theta$ is the crank angle and t is time. If the engine speed is derived with respect to time, then

$$\frac{d\omega}{dt} = \frac{d\omega}{d\theta}\frac{d\theta}{dt} = \frac{d\omega}{d\theta}\omega, \qquad (6)$$

is obtained
which gives

$$\frac{d\omega}{d\theta} = \frac{1}{J} \cdot \frac{1}{\omega} M_{var}. \qquad (7)$$

For a four-stroke engine $M_{var}$ may be described approximately as

$$M_{var} = A_M \cos(N\theta/2 + \varphi) \qquad (8)$$

where N is the number of cylinders and $\varphi$ is a phase offset. By integrating between $\theta_1$ and $\theta_2$

$$\int_{\theta_1}^{\theta_2} \frac{d\omega}{d\theta} d\theta = \frac{1}{J}\int_{\theta_1}^{\theta_2} \frac{1}{\omega} M_{var} d\theta \approx \frac{1}{J\omega}\int_{\theta_1}^{\theta_2} M_{var} d\theta = \frac{A_M}{J\omega}\int_{\theta_1}^{\theta_2} \cos(N\theta/2 + \varphi) d\theta, \qquad (9)$$

is obtained,
which applies approximatively, since $\omega$ does not fluctuate so much and is therefore replaced with the mean engine speed $\overline{\omega}$. Thus, one obtains that

$$\omega(\theta_2) - \omega(\theta_1) = \frac{2A_M}{NJ\overline{\omega}}\left(\sin(N\theta_1/2 + \varphi) - \sin(N\theta_2/2 + \varphi)\right). \qquad (10)$$

Through suitable selection of $\theta_1$ and $\theta_2$ approximatively is obtained

$$A_M = \overline{\omega}\psi A_{\omega} \qquad (11)$$

where $A_{\omega}$ is the combustion engine's engine speed amplitude and $\psi$ is a constant. Since the mean torque is proportionate to the torque amplitude, the combustion engine's mean torque generated during a combustion cycle may thus be estimated based on the engine's engine speed amplitude $A_{\omega}$ and mean engine speed $\overline{\omega}$.

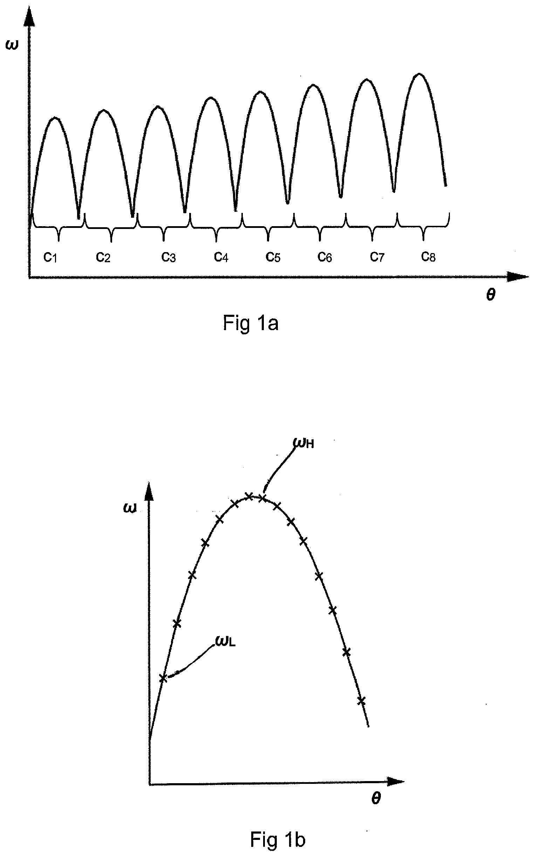

In Fig. 1a a schematic diagram is displayed for an eight-cylinder engine, where the engine speed $\omega$ of a combustion engine is displayed as a function of the crank angle $\theta$. Each cylinder $c_1$, $c_2$, $c_3$, $c_4$, $c_5$, $c_6$, $c_7$, $c_8$ gives rise to an engine speed fluctuation. The number of engine speed fluctuations, and thus also torque fluctuations, which the combustion engine generates during a combustion cycle is therefore identical to the number of cylinders. An eight cylinder combustion engine thus has eight fluctuations per combustion cycle, wherein each fluctuation is associated with one of the cylinders as displayed in Fig. 1a. For a four-stroke engine a combustion cycle comprises 720 crank angle degrees.

In the method according to the invention, the engine's instantaneous engine speed is measured at a number of occasions per combustion cycle. This preferably is effected by an engine speed sensor detecting markings on the engine's flywheel, which markings are usually located at a constant number of crank angle degrees' interval, $d\theta$. By checking the time it takes for the flywheel to rotate $d\theta$ crank angle degrees, the instantaneous engine speed at a certain crank angle $\theta$ is obtained. The number of measuring values associated with the torque contribution from a cylinder is provided by

$$x = \frac{180 \cdot m}{N \cdot \mathrm{d}\theta}, \tag{12}$$

where m is the number of strokes of the engine and N is the number of cylinders. For a four stroke engine with eight cylinders and $\mathrm{d}\theta{=}6°$, 15 measuring values per cylinder are thus obtained during a combustion cycle, as displayed schematically for a cylinder in Fig. 1b. These measuring values are stored in an engine speed vector, which may be in the form of a circular buffer wherein, when the buffer has been filled, one starts all over again, writing over previous values. In order to determine an engine speed amplitude $A_\omega$ for each cylinder, one disregards the $n$-1 highest and lowest values, where $2 \leq n \leq x/2$, and the difference between the subsequently remaining highest and lowest values are calculated. This series of differences forms a filtered engine speed amplitude $A_{\omega,f}$. Which value is selected for $n$ depends on the number of measuring values per cylinder. In the case illustrated in Fig. 1b, $n$ is set at 2, wherein the second highest value $\omega_\mathrm{H}$ and the second lowest value $\omega_\mathrm{L}$ are used to calculate the filtered engine speed amplitude. A suitable value for $n$ may in the above mentioned example, i.e. for a four stroke engine with eight cylinders and $\mathrm{d}\theta{=}6°$, be 2-3, wherein the respective 1-2 highest and lowest engine speed values for each cylinder are disregarded. The more values are removed, the less sensitive the estimated torque for diverging measuring values becomes, while at the same time information is lost and there is a risk that the engine speed amplitude is calculated at too low a value.

When the filtered engine speed amplitude $A_{\omega,f}$ has been determined, a signal D is formed, describing this amplitude as a function of crank angle $\theta$. This signal is filtered through a linear filter such as a low pass filter or a non-linear filter in the form of e.g. a median filter, which reduces the bandwidth of the signal, for the formation of a new signal H. For example, a band pass filter in the form of an IIR-filter with suitably selected filter coefficients may be used for the formation of the signal H. The signal H is re-sampled with respect to time in a subsequent step, for the formation of the signal E. A typical sampling frequency is 10 ms, but other frequencies may also be used. The now obtained signal E describes the combustion engine's engine speed variations as a function of time.

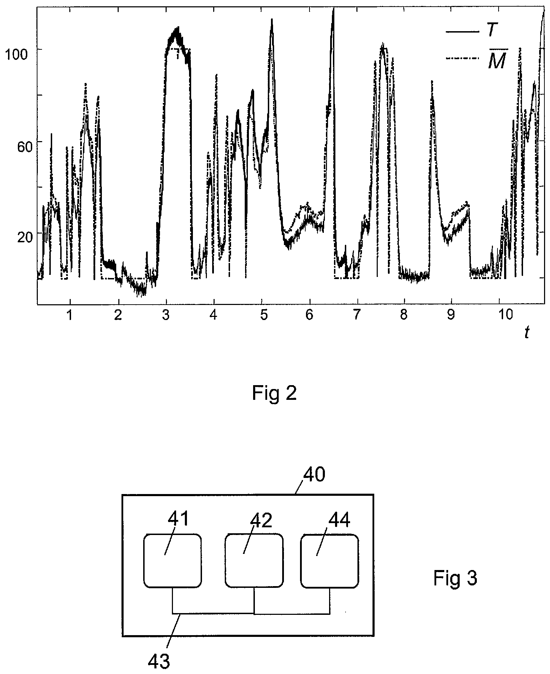

In order to estimate the mean torque based on this signal E a model is used. A simple model for the estimated torque T is

$$T = \alpha + \beta \cdot E, \tag{13}$$

where $\alpha$ and $\beta$ are coefficients. Fig. 2 shows a torque estimate T, obtained with the help of this simple model, as a function of normalised time t together with a measured mean torque for the above mentioned eight cylinder combustion engine. The estimated torque T is shown as a solid line and the measured generated mean torque $\overline{M}$ is shown as a dashed line, both displayed as a percentage of the maximum torque.

Alternative models that may be used to estimate torque are for example

$$T = \alpha + \beta \cdot E + \gamma \cdot V, \tag{14}$$

where V is a signal representing the calculated mean engine speed for a cylinder as a function of time, and where $\gamma$ is a coefficient. The signal V may e.g. be obtained by low pass filtering the crank angle based engine speed signal, which gives a mean engine speed, and then re-sampling the mean engine speed obtained with respect to time. The mean engine speed may suitably be calculated for the same period as the mean torque.

Another model is

$$T = \alpha + \beta \cdot E + \gamma \cdot V + \mu \cdot E \cdot V, \tag{15}$$

where $\mu$ is yet another coefficient. In order to further improve the estimation, other operating characteristics may be included in the model, such as the charge pressure P. Such a model may be

$$T = \alpha + \beta \cdot E + \lambda \cdot P, \tag{16}$$

where $\lambda$ is a coefficient. The estimation in this case becomes dependent on the reliability of the charge pressure measurement. In addition, more sensors are required than in case only engine speed and engine speed amplitude are used to estimate the torque. Naturally, other operating characteristics may be used in the model, as well as other combinations and higher orders of the operating characteristics included, than those mentioned above. Examples of other operating characteristics which may be used are exhaust temperature, exhaust collector pressure and measured or estimated fuel amount injected into the engine.

The coefficients in the above mentioned models may be determined at an initial calibration of a control device, which is used for the estimation of the engine's torque during the operation of the engine. At this calibration, the above described steps are carried out, i.e. the engine's engine speed is measured, a filtered engine speed amplitude is determined and a time sampled signal $E$, which describes this amplitude, is created. Simultaneously with the engine speed measurements the torque $M$ generated by the engine is also measured. Coefficients of a polynomial are selected through curve fitting, so that the polynomial describes the measured generated torque as a function depending on at least the signal $E$. The coefficients may preferably be selected by minimising the smallest square error in the function T in relation to the measured torque.

In certain applications the drive line's dynamics are of great significance, and the coefficients in the expression for $T$ may then be selected depending on which gear is used. In these cases a parameter from a control device for the gearbox may be read, in order to determine which coefficients should be selected. Alternatively the gear may be selected based on measurements of speed and engine speed, or in another applicable manner.

The method is well suited for implementation during control of combustion engines which are used in the operation of heavy goods vehicles. These engines are usually operated with a narrower engine speed range than engines in for example passenger cars. The highest engine speeds are usually in the range of 2000 rpm in such a vehicle, and at such engine speeds the engine speed signal may be measured with a good resolution and may therefore be treated directly without having to be estimated first.

A computer program code for the implementation of a method according to the invention is suitably included in a computer program, loadable into the internal memory of a computer, such as the internal memory of an electronic control device of a motor vehicle. Such a computer program is suitably provided via a computer program product comprising a data storage medium readable by an electronic control device, the data storage medium of which has the computer program stored thereon. Said data storage medium is e.g. an optical data storage medium in the form of a CD-ROM, a DVD, etc., a magnetic data storage medium in the form of a hard disk drive, a floppy disc, a cassette, etc., or a Flash memory or a ROM, PROM, EPROM or EEPROM type memory.

Fig. 3 illustrates schematically an electronic control device 40 comprising execution means 41, such as a central processor unit (CPU), for the execution of a computer software. The execution means 41 communicates with a memory 42, e.g. a RAM memory, via a data bus 43. The control device 40 also comprises a data storage medium 44, e.g. in the form of a Flash memory or a ROM, PROM, EPROM or EEPROM type memory. The execution means 41 communicates with the data storage means 44 via the data bus 43. A computer program comprising computer program code for the implementation of a method according to the invention is stored on the data storage medium 44.

**Claims**

1. Method for estimation of a mean torque generated by a combustion engine with at least two cylinders, comprising the steps to:

   a) generate an engine speed vector, wherein several measuring values are registered during at least one part of a combustion cycle in the engine, wherein each measuring value is associated with one of the engine's cylinders and represents the engine's instantaneous speed at the respective measuring time,

   **characterized in that** it further comprises the steps to:

   b) determine the engine speed vector's n:th highest and n:th lowest value, respectively, associated with the respective cylinder, where $2 \leq n \leq x/2$, where $x$ is the number of measuring values in the engine speed vector associated with the respective cylinder,
   c) calculate the difference between the two values determined at step b for the respective cylinder,
   d) generate a signal $E$ representing the differences obtained in step c as a function of time,
   e) estimate the torque generated by the engine in step a as a function $T$ depending on at least the signal $E$ generated at step d.

2. Method according to claim 1, **characterised in that** it is carried out with the help of a control device, wherein the function $T$ is a polynomial, whose coefficients are determined at an initial calibration of said control device.

3. Method according to claim 2, **characterised in that** the initial calibration of the control device comprises carrying out said steps a-e, and the additional steps:

   f) to measure a torque generated by the engine, simultaneously with step a,
   g) to select coefficients of a polynomial by way of curve fitting, so that the polynomial describes the in step f measured generated torque as a function depending on at least the signal $E$.

4. Method according to any one of the previous claims, **characterised in that** the torque generated by the engine is estimated in step e as a function $T = \alpha + \beta E$, where $\alpha$ and $\beta$ are coefficients and wherein $E$ is the signal generated at step d.

5. Method according to any one of claims 1 to 3, **characterised in that** a mean engine speed signal $V$ representing the engine's mean engine speed $\overline{\omega}$ is generated, and that the torque generated by the engine in step e is estimated as a function $T$ depending on the mean engine speed signal $V$.

6. Method according to claim 5, **characterised in that** the torque generated by the engine is estimated as a function $T = \alpha + \beta E + \gamma V + \eta EV$, where $\alpha$, $\beta$, $\gamma$ and $\eta$ are coefficients, where $E$ is the signal generated in step d and where $V$ is the mean engine speed signal.

7. Method according to any one of claims 1 to 3 or 5, **characterised in that** the engine's charge air pressure $P$ is measured and **in that** the torque generated by the engine in step e is estimated as a function $T$ depending on the charge air pressure.

8. Method according to any one of the previous claims, **characterised in that** the engine speed vector's length corresponds to the number of measuring occasions during a combustion cycle in the engine.

9. Method according to any one of the previous claims, **characterised in that** the number of crank angle degrees $\theta$ between each measuring occasion during a combustion cycle in the engine is constant.

10. Method according to any one of the previous claims, **characterised in that** the function $T$ is selected depending on the gear used to drive a vehicle which is driven by the combustion engine.

11. Method according to any one of the previous claims, **characterised in that** the function $T$ is selected depending on the ambient parameters comprising ambient pressure and/or temperature and/or fuel type.

12. Method according to any one of the previous claims, **characterised in that** the differences calculated in step c form a signal $D$ as a function of the crank angle, which signal $D$ is filtered through a low pass filter or median filter to form a signal $H$.

13. Method according to claim 12, **characterised in that** in step d the signal $E$ is generated by re-sampling the signal $H$ formed in step c with respect to time.

14. Computer program comprising computer program code to cause a computer to carry out the steps of the method according to any one of claims 1-13 when the computer program code is executed in the computer.

15. A computer data storage medium (44) which is readable by a computer, the computer program code of a computer program according to claim 14 being stored on the data storage medium.

16. Electronic control device (40) comprising execution means (41), a memory (42) connected to the execution means and a data storage medium (44) according to claim 15 and being connected to the execution means, the computer program code in a computer program according to claim 14 being stored on said data storage medium (44).

17. Motor vehicle comprising an electronic control device (40) according to claim 16.

**Patentansprüche**

1. Verfahren zum Schätzen eines von einem Verbrennungsmotor mit mindestens zwei Zylindern erzeugten mittleren Drehmoments, mit den Schritten:

a) Erzeugen eines Drehzahlvektors des Verbrennungsmotors, wobei mehrere Messwerte während zumindest eines Teils eines Verbrennungszyklus im Verbrennungsmotor registriert werden, wobei jeder der Messwerte einem der Zylinder des Verbrennungsmotors zugeordnet ist und die momentane Drehzahl zur jeweiligen Messzeit repräsentiert,

**dadurch gekennzeichnet, dass** es ferner die Schritte aufweist:

b) Bestimmen des n-ten höchsten bzw. des n-ten niedrigsten Wertes des Drehzahlvektors des Verbrennungsmotors, der dem jeweiligen Zylinder zugeordnet ist, wobei $2 \leq v \leq x/2$, wobei $x$ die Anzahl der Messwerte im Drehzahlvektor des Verbrennungsmotors ist, der dem jeweiligen Zylinder zugeordnet ist,
c) Berechnen der Differenz zwischen den in Schritt b für den jeweiligen Zylinder bestimmten zwei Werten,
d) Erzeugen eines Signals $E$, das die in Schritt c erhaltene Differenz als Funktion der Zeit repräsentiert,
e) Schätzen des vom Verbrennungsmotor in Schritt a erzeugten Drehmoments als Funktion $T$ in Abhängigkeit von mindestens dem in Schritt d erzeugten Signal $E$

2. Verfahren nach Anspruch 1, **dadurch gekennzeichnet, dass** es mit Hilfe einer Steuereinrichtung ausgeführt wird, wobei die Funktion $T$ ein Polynom ist, dessen Koeffizienten bei einer Erstkalibrierung der Steuereinrichtung bestimmt werden.

3. Verfahren nach Anspruch 2, **dadurch gekennzeichnet, dass** die Erstkalibrierung der Steuereinrichtung die Ausführung der Schritte a bis e und der zusätzlichen Schritte umfasst:

f) gleichzeitig mit Schritt a Messen eines vom Verbrennungsmotor erzeugten Drehmoments,
g) Wählen der Koeffizienten eines Polynoms mittels Kurvenanpassung, so dass das Polynom das in Schritt f gemessene erzeugte Drehmoment als eine Funktion in Abhängigkeit von mindestens dem Signal $E$ beschreibt.

4. Verfahren nach einem der vorigen Ansprüche, **dadurch gekennzeichnet, dass** das vom Verbrennungsmotor erzeugte Drehmoment in Schritt e als Funktion $T = \alpha + \beta E$ geschätzt wird, wobei $\alpha$ und $\beta$ Koeffizienten sind, und wobei $E$ das in Schritt d erzeugte Signal ist.

5. Verfahren nach einem der Ansprüche 1 bis 3, **dadurch gekennzeichnet, dass** ein Signal $V$ der mittleren Drehzahl des Verbrennungsmotors, das die mittlere Drehzahl $\overline{\omega}$ des Verbrennungsmotors repräsentiert, erzeugt wird, und dass das vom Verbrennungsmotor in Schritt e erzeugte Drehmoment als Funktion $T$ in Abhängigkeit vom Signal $V$ der mittleren Drehzahl des Verbrennungsmotors geschätzt wird.

6. Verfahren nach Anspruch 5, **dadurch gekennzeichnet, dass** das vom Verbrennungsmotor erzeugte Drehmoment als eine Funktion $T = \alpha + \beta E + \gamma V + \mu EV$, wobei $\alpha$, $\beta$, $\gamma$ und $\eta$ Koeffizienten sind, $E$ das in Schritt d erzeugte Signal ist und $V$ das Signal der mittleren Drehzahl des Verbrennungsmotors ist.

7. Verfahren nach einem der Ansprüche 1 bis 3 oder 5, **dadurch gekennzeichnet, dass** der Ladeluftdruck $P$ des Verbrennungsmotors gemessen wird, und dass das vom Verbrennungsmotor in Schritt e erzeugte Drehmoment als eine Funktion $T$ in Abhängigkeit vom Ladeluftdruck $P$ geschätzt wird.

8. Verfahren nach einem der vorigen Ansprüche, **dadurch gekennzeichnet, dass** die Länge des Drehzahlvektors des Verbrennungsmotors der Anzahl der Messvorgänge während eines Verbrennungszyklus im Verbrennungsmotor entspricht.

9. Verfahren nach einem der vorigen Ansprüche, **dadurch gekennzeichnet, dass** die Anzahl der Kurbelwinkelgradel $\Theta$ zwischen jedem Messvorgang während eines Verbrennungszyklus im Verbrennungsmotor konstant ist.

10. Verfahren nach einem der vorigen Ansprüche, **dadurch gekennzeichnet, dass** die Funktion $T$ in Abhängigkeit von dem Gang gewählt wird, der zum Fahren eines vom Verbrennungsmotor angetriebenen Fahrzeugs eingelegt wird.

11. Verfahren nach einem der vorigen Ansprüche, **dadurch gekennzeichnet, dass** die Funktion $T$ in Abhängigkeit von Umweltparametern gewählt wird, die den Umgebungsdruck und/oder die Umgebungstemperatur und/oder den Kraftstofftyp umfassen.

**12.** Verfahren nach einem der vorigen Ansprüche, **dadurch gekennzeichnet, dass** die in Schritt c berechneten Differenzen ein Signal D als Funktion des Kurbelwinkels bilden, wobei das Signal *D* durch ein Tiefpassfilter oder ein Medianfilter gefiltert wird, um ein Signal *H* zu bilden.

**13.** Verfahren nach Anspruch 12, **dadurch gekennzeichnet, dass** in Schritt d das Signal *E* durch erneutes Abtasten des in Schritt c bezüglich der Zeit gebildeten Signals *H* erzeugt wird.

**14.** Computerprogramm mit einem Computerprogrammcode, der den Computer veranlasst, die Schritte des Verfahrens nach einem der Ansprüche 1 bis 13 auszuführen, wenn der Computerprogrammcode im Computer ausgeführt wird.

**15.** Computer-Datenspeichermedium (44), das von einem Computer lesbar ist, wobei der Computerprogrammcode eines Computerprogramms nach Anspruch 14 auf dem Datenspeichermedium gespeichert ist.

**16.** Elektronische Steuereinrichtung (40) mit Ausführungsmitteln (41), einem Speicher (42), der mit den Ausführungsmitteln (41) verbunden ist, und einem Datenspeichermedium (44) nach Anspruch 15, das mit den Ausführungsmitteln verbunden ist, wobei der Computerprogrammcode eines Computerprogramms nach Anspruch 14 auf dem Datenspeichermedium (44) gespeichert ist.

**17.** Kraftfahrzeug mit einer elektronischen Steuereinrichtung (40) nach Anspruch 16.

**Revendications**

**1.** Procédé d'estimation d'un couple moyen généré par un moteur à combustion ayant au moins deux cylindres, comprenant les étapes de :

a) générer un vecteur vitesse de moteur, dans lequel plusieurs valeurs de mesure sont enregistrées au cours d'au moins une partie d'un cycle de combustion du moteur, chaque valeur de mesure étant associée à l'un des cylindres du moteur et représentant la vitesse instantanée du moteur à l'instant de mesure respectif,

**caractérisé en ce qu'**il comprend en outre les étapes de :

b) déterminer la nième valeur la plus haute et la nième valeur la plus basse du vecteur vitesse de moteur, respectivement, associées au cylindre respectif, où $2 \leq n \leq x/2$, où *x* est le nombre de valeurs de mesure du vecteur vitesse de moteur associé au cylindre respectif,
c) calculer la différence entre les deux valeurs déterminées à l'étape b pour le cylindre respectif,
d) générer un signal *E* représentant les différences obtenues à l'étape c en fonction du temps,
e) estimer le couple généré par le moteur à l'étape a comme une fonction *T* dépendant au moins du signal E généré à l'étape d.

**2.** Procédé selon la revendication 1, **caractérisé en ce qu'**il est effectué à l'aide d'un dispositif de commande, la fonction *T* étant un polynôme dont les coefficients sont déterminés lors d'une calibration initiale dudit dispositif de commande.

**3.** Procédé selon la revendication 2, **caractérisé en ce que** la calibration initiale du dispositif de commande comprend la mise en oeuvre desdites étapes a-e et des étapes supplémentaires de :

f) mesurer un couple généré par le moteur, simultanément à l'étape a,
g) sélectionner des coefficients d'un polynôme par l'intermédiaire d'un ajustement de courbe, de sorte que le polynôme décrive le couple généré mesuré à l'étape f comme une fonction dépendant au moins du signal *E*.

**4.** Procédé selon l'une quelconque des revendications précédentes, **caractérisé en ce que** le couple généré par le moteur est estimé à l'étape e comme une fonction $T = a + \beta E$, où $\alpha$ et $\beta$ sont des coefficients et où *E* est le signal généré à l'étape d.

**5.** Procédé selon l'une quelconque des revendications 1 à 3, **caractérisé en ce qu'**un signal de vitesse de moteur moyenne *V* représentant la vitesse de moteur moyenne $\overline{\omega}$ du moteur est généré, et **en ce que** le couple généré par le moteur à l'étape e est estimé comme une fonction de *T* dépendant du signal de vitesse de moteur moyenne *V*.

**6.** Procédé selon la revendication 5, **caractérisé en ce que** le couple généré par le moteur est estimé comme une fonction $T = a + \beta E + \gamma V + \eta EV$, où $\alpha$, $\beta$, $\gamma$ et $\eta$ sont des coefficients, où $E$ est le signal généré à l'étape d et où $V$ est le signal de vitesse de moteur moyenne.

**7.** Procédé selon l'une quelconque des revendications 1 à 3 ou 5, **caractérisé en ce que** la pression d'air de charge $P$ du moteur est mesurée et **en ce que** le couple généré par le moteur est estimé à l'étape e comme une fonction T dépendant de la pression d'air de charge.

**8.** Procédé selon l'une quelconque des revendications précédentes, **caractérisé en ce que** la longueur du vecteur vitesse de moteur correspond au nombre d'événements de mesure pendant un cycle de combustion du moteur.

**9.** Procédé selon l'une quelconque des revendications précédentes, **caractérisé en ce que** le nombre de degrés d'angle de vilebrequin $\theta$ entre chaque événement de mesure pendant un cycle de combustion du moteur est constant.

**10.** Procédé selon l'une quelconque des revendications précédentes, **caractérisé en ce que** la fonction $T$ est sélectionnée en fonction de l'engrenage utilisé pour entraîner un véhicule qui est entraîné par le moteur à combustion.

**11.** Procédé selon l'une quelconque des revendications précédentes, **caractérisé en ce que** la fonction $T$ est sélectionnée en fonction des paramètres ambiants comprenant la pression ambiante et/ou la température ambiante et/ou le type de carburant.

**12.** Procédé selon l'une quelconque des revendications précédentes, **caractérisé en ce que** les différences calculées à l'étape c forment un signal $D$ en fonction de l'angle de vilebrequin, lequel signal $D$ est filtré à travers un filtre passe-bas ou un filtre médian pour former un signal $H$.

**13.** Procédé selon la revendication 12, **caractérisé en ce que**, à l'étape d, le signal $E$ est généré par ré-échantillonnage par rapport au temps du signal $H$ formé à l'étape c.

**14.** Programme informatique comprenant un code de programme informatique pour amener un ordinateur à effectuer les étapes du procédé selon l'une quelconque des revendications 1 à 13 lorsque le code de programme informatique est exécuté dans l'ordinateur.

**15.** Support de stockage de données informatique (44) qui est lisible par un ordinateur, le code de programme informatique d'un programme informatique selon la revendication 14 étant stocké sur le support de stockage de données.

**16.** Dispositif de commande électronique (40) comprenant des moyens d'exécution (41), une mémoire (42) connectée aux moyens d'exécution et un support de stockage de données (44) selon la revendication 15 et qui est connecté aux moyens d'exécution, le code de programme informatique dans un programme informatique selon la revendication 14 étant mémorisé sur ledit support de stockage de données (44).

**17.** Véhicule à moteur comprenant un dispositif de commande électronique (40) selon la revendication 16.

Fig 1a

Fig 1b

Fig 2

Fig 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030167118 A
- EP 1559898 A
- US 20090132182 A
- US 20080319725 A
- DE 102009001128
- DE 19941171
- US 4697561 A